# EUROPÄISCHE PATENTSCHRIFT

(11) **EP 2 270 354 B1**
(45) Veröffentlichungstag und Bekanntmachung des Hinweises auf die Patenterteilung: **27.03.2013**
(21) Anmeldenummer: 10167919.9
(22) Anmeldetag: 30.06.2010
(51) Int. Cl.: F16F 7/00

(54) **Seilendverankerung mit Überlastungsschutz**
Rope end anchor with overload prevention
Ancrage d'extrémité de corde doté d'une protection contre les surcharges

(30) Priorität: 02.07.2009 DE 102009033032
(43) Veröffentlichungstag der Anmeldung: 05.01.2011
(73) Patentinhaber: Gartner Steel and Glass GmbH, 97080 Würzburg (DE)
(72) Erfinder: Wellershoff, Frank, Dr., 97080 Würzburg (DE)
(74) Vertreter: advotec.

(56) Entgegenhaltungen:
- EP-A1- 0 508 840
- WO-A1-84/04773
- FR-A1- 2 673 253
- US-A- 3 866 367

## Beschreibung

Die Erfindung betrifft eine Seilendverankerung nach dem Oberbegriff des Anspruchs 1.

Insbesondere im Hochbau, dort wiederum insbesondere im Fassadenbau, kommen häufig Seilzugglieder zur Anwendung. Seilzugglieder weisen dabei ein Seil und Seilendverankerungen auf, mit denen das Seil beispielsweise am Tragwerk bzw. der Tragstruktur eines Gebäudes befestigbar ist. An den Seilzuggliedern können dann Fassadenelemente, wie beispielsweise Glas-, Kunststoff- oder Metallpaneele, befestigt werden.

Eine derartige Seilkonstruktion wird üblicherweise so dimensioniert und ausgelegt, dass die Belastbarkeit der Seilzugglieder höher ist als die zu erwartenden maximalen Belastungen, beispielsweise durch Windlasten, Temperaturlasten, Eigengewicht, Vorspannung etc., zuzüglich entsprechender Sicherheitsfaktoren. Um Verformungen der Seile und der Fassade unter planmäßigen Lasten zu begrenzen, werden üblicherweise stark dimensionierte Seilzugglieder mit hohen Vorspann- und Bruchkräften verwendet. Treten nun außerplanmäßige Belastungen, beispielsweise durch Fahrzeuganprall oder Explosionsdruckwellen, auf, werden hohe Lasten auf die Tragstruktur übertragen, so dass diese statisch auf diese außergewöhnlich hohen Lasten ausgelegt werden muss, um eine Zerstörung der Tragstruktur und damit des Gebäudes zu verhindern. Dies erfordert hohen konstruktiven Aufwand und verursacht hohe Kosten.

Weiter ist beispielsweise aus der gattungsbildenden DE 2 053 832 A ein Sollbruch-Element bekannt, bei dem zwischen zwei Anschlusselementen eine Mehrzahl von Laschen angeordnet ist. Diese Laschen sind derart ausgelegt, dass bei Überschreitung einer festgelegten Zugkraft eine oder mehrere Laschen an vorgegebener Stelle brechen, wobei das frei werdende Seilende durch die nicht gebrochenen Laschen gefangen wird.

Ausgehend von diesem Stand der Technik ist es die Aufgabe der vorliegenden Erfindung, Seilkonstruktionen, insbesondere im Fassadenbau, zu ermöglichen, die eine hohe Eigensteifigkeit und Belastbarkeit aufweisen und zum Anderen die Tragstruktur von diese zerstörenden Spitzenbelastungen zuverlässig entkoppeln.

Diese Aufgabe wird durch eine Seilendverankerung nach der Lehre des Anspruchs 1 gelöst.

Vorteilhafte Ausgestaltungen sind Gegenstand der Unteransprüche.

Die Seilendverankerung zur Befestigung mindestens eines Seiles an einem Tragwerk gemäß der Erfindung weist in zunächst bekannter Weise mindestens ein erstes Anschlusselement zur Anbindung an das Tragwerk, mindestens ein zweites Anschlusselement zur Anbindung an das Seil und mindestens ein Koppelelement zur kraftübertragenden Verbindung der beiden Anschlusselemente auf. Dabei ist im Bereich des Koppelelementes eine als Sollbruchstelle ausgebildete Überlasteinrichtung vorgesehen, die bei Überschreiten einer kritischen Belastung die Verbindung zwischen den beiden Anschlusselementen löst. Ferner ist eine Anschlageinrichtung vorgesehen, die die Relativbewegung der Anschlusselemente nach dem Lösen der Verbindung nach Überschreiten der kritischen Belastung begrenzt.

Gemäß der Erfindung weist die Seilendverankerung eine Querplatte, die mit dem Koppelement kraftübertragend verbunden, beispielsweise verschweißt oder einstückig angeformt ist, und mindestens eine Zugstange, die die Querplatte in einer Ausnehmung mit zumindest geringfügigem radialen Spiel durchgreift, auf. Ein Ende der Zugstange ist dabei auf einer Seite der Querplatte mit einem der beiden Anschlusselemente kraftübertragend verbunden, beispielsweise verschweißt oder einstückig angeformt. Am gegenüberliegenden Ende der Zugstange ist auf der anderen Seite der Querplatte eine Endplatte vorgesehen, die nach Überschreiten der kritischen Belastung als Anschlag auf der Querplatte dient. Dabei sind vorzugsweise mindestens zwei solcher Zugstangen vorgesehen.

Im Gegensatz zu den bekannten Seilendverankerungen, die eine starre Verbindung zwischen Seil und Tragstruktur bilden, bis entweder die Seilkonstruktion insgesamt versagt oder aber, bei Spitzenbelastung, beispielsweise im Fall einer Explosionsdruckwelle, die Tragstruktur zerstört wird, ist gemäß der vorliegenden Erfindung eine Überlasteinrichtung vorgesehen, die bei Überschreiten einer kritischen Belastung die Verbindung zwischen den beiden Anschlusselementen löst. Dies bedeutet mit anderen Worten, dass durch diese Überlasteinrichtung bei Überschreiten einer genau definierten Belastung ein Lösen des Seilzuggliedes von der Tragstruktur erfolgt, wodurch die auf die Tragstruktur wirkende Maximallast verringert wird, so dass die Tragstruktur insgesamt auf eine geringere Belastung ausgelegt werden kann.

Aufgrund dieser Gestaltung erfolgt zudem eine Längung des gesamten Seilzuggliedes beim Auslösen des Überlastungsschutzes, wodurch die Vorspannkraft verringert und die aeroelastische Dämpfung der Luftmasse hinter der Fassade vergrößert wird. Dadurch wird auch die Beanspruchung der Fassadenelemente, insbesondere der Gläser und der Glashalter, geringer, so dass die Glasscheiben, zumeist Verbundglasscheiben, entweder nicht brechen oder aber die Glassplitter eine zumindest geringere Beschleunigung erfahren und somit die Flugweite der Glassplitter geringer und die Schäden hinter der Fassade geringer sind.

Die Ausbildung der Sollbruchstelle des Koppelelementes kann beispielsweise durch eine gezielte Schwächung des Querschnitts des Koppelelementes, insbesondere nach Art einer umlaufenden Ringnut, erfolgen.

Um insbesondere Beschädigungen und Verletzungen von Personen im Inneren des mit einer solchen Seilfassadenkonstruktion versehenen Gebäudes zu verhindern, wird erfindungsgemäß nach dem Auslösen des Überlastungsschutzes das Seilzugglied in einem Resttragfähigkeitszustand durch die Anschlageinrichtung wieder kontrolliert gehalten. Dies bedeutet mit anderen Worten, dass nach dem Auslösen des Überlastschutzes durch Längung des Seilzuggliedes die Spannung zwar schlagartig abgebaut werden kann, aber eine Resttragfähigkeit aufrechterhalten wird, die ein Kollabieren der Fassadenkonstruktion insgesamt, verbunden mit einem möglichen Eindringen von Fassadenteilen in Innenräume des Gebäudes, verhindert.

Das Koppelelement kann im einfachsten Fall als Zugstab, Zugband oder Zugplatte oder als Zugstab-, Zugplatten- oder Zugbandanordnung mit mehreren Zugelementen ausgebildet sein.

Um die nach dem Auslösen der Überlastschutzes durch die stark beschleunigten Seilenden auf die Anschlageinrichtung wirkenden Kräfte zu verringern, ist nach einem weiteren Ausführungsbeispiel der Erfindung eine Feder- und/oder Dämpfereinrichtung zur Aufnahme der nach dem Lösen der Verbindung nach Überschreiten der kritischen Belastung auf die Anschlageinrichtung wirkenden Lasten vorgesehen. Dabei kann diese Feder- und/oder Dämpfereinrichtung wahlweise elastische Elemente, insbesondere in Form einer Schraubenfeder, Tellerfeder, eines Tellerfederpaketes oder einer Elastomerfeder, elasto-plastische Elemente, insbesondere in Form eines Kunststoffpuffers, oder plastisch verformbare Elemente, insbesondere aus Aluminiumschaum, Aluminiumwabenmaterial, Aluminiumkugeln, Porenbeton oder Leichtbeton oder dergleichen, aufweisen.

Bei dem vorstehend beschriebenen Ausführungsbeispiel können die elastisch, elasto-plastisch und/oder plastisch verformbaren Elemente zwischen der Querplatte und der Endplatte angeordnet sein und von der Zugstange durchgriffen werden.

Gemäß einem weiteren bevorzugten Ausführungsbeispiel der Erfindung sind mindestens zwei Zugstangen vorgesehen, wobei jede Zugstange entweder eine separate Feder- und/oder Dämpfereinrichtung durchgreift oder aber die Zugstangen eine gemeinsame Feder- und/oder Dämpfereinrichtung durchgreifen.

Vorzugsweise sind dabei Zugstangen und/oder die Feder- und/oder Dämpfereinrichtungen symmetrisch zur durch das Koppelelement verlaufenden Längsachse angeordnet, wodurch sich insgesamt eine symmetrische Lastverteilung ergibt.

In grundsätzlich beliebiger Weise kann die Feder- und/oder Dämpfereinrichtung im Wesentlichen aus einem homogenen und/oder einstückigen Feder- und/oder Dämpferelement bestehen. Nach einem weiteren Ausführungsbeispiel jedoch weist die Feder- und/oder Dämpfereinrichtung eine Mehrzahl von in Belastungsrichtung hintereinander angeordneten Feder- und/oder Dämpfungselementen auf, die durch dazwischen angeordnete Zwischenplatten getrennt sind. Diese Zwischenplatten, die vorzugsweise aus einem harten Material, beispielsweise Stahl, bestehen, dienen dabei insbesondere zur definierten Krafteinleitung in die jeweiligen Feder- und/oder Dämpferelemente.

Um insbesondere bis zum vollständigen Bruch der bestimmungsgemäßen Sollbruchstelle keine Lastanteile in die Feder- und/oder Dämpfereinrichtung einzuleiten, kann nach einer weiteren Ausführungsform zwischen der Querplatte und der Feder- und/oder Dämpfereinrichtung, zwischen der Endplatte und der Feder- und/oder Dämpfereinrichtung und/oder zwischen den Feder- und/oder Dämpfungselementen der Feder- und/oder Dämpfereinrichtung mindestens eine Zwischenlage aus einem Material geringer Festigkeit, beispielsweise in Form einer Silikonplatte, vorgesehen sein.

Nach einem weiteren Ausführungsbeispiel der Erfindung ist ferner eine Mitnehmerplatte an der Zugstange zwischen dem Ende der Zugstange, das mit dem Anschlusselement verbunden ist, und der Querplatte vorgesehen, wobei zwischen der Mitnehmerplatte und der Querplatte elastisch, elasto-plastisch und/oder plastisch verformbaren Elemente angeordnet und von der Zugstange durchgriffen werden können. Dabei dient diese Mitnehmerplatte als Anschlag bei einem Rückschlagen des Seils in Gegenrichtung zur Bewegung nach dem Auslösen der Überlasteinrichtung, wobei die auf die Anschlagvorrichtung wirkenden Kräfte wiederum elastisch, elasto-plastisch und/oder plastisch aufgenommen werden können.

Vorzugsweise ist die Zugstange bzw. sind die Zugstangen zumindest abschnittsweise mit einem Gewinde versehen. Dadurch können in einfacher Weise mittels einer Spannmutter die elastisch, elasto-plastisch und/oder plastisch verformbaren Elemente zwischen der Endplatte und der Querplatte bzw. der Mitnehmerplatte und der Querplatte auf einen vorbestimmten Wert vorgespannt werden.

In grundsätzlich beliebiger Weise kann die erfindungsgemäße Anbindung eines Seilzuggliedes an einem Tragwerk auch zur Kopplung zweier Seilzugglieder Verwendung finden. Ferner kann ein Seilzugglied im Sinne der vorliegenden Erfindung ein oder mehrere Zugseile aufweisen, die parallel oder winklig zueinander angeordnet sein können. Dabei kann jedem Zugseil ein eigenes Koppelglied zugeordnet sein, oder aber zwei oder mehr Zugseile können an einem Koppelglied befestigt sein. In prinzipiell gleicher Weise kann jedem Zugseil und/oder Koppelglied eine eigene Feder- und/oder Dämpfereinrichtung zugeordnet sein oder aber die Zugseile und/oder die Koppelglieder werden jeweils über eine gemeinsame Feder- und/oder Dämpfereinrichtung angebunden.

Im Folgenden wird die Erfindung anhand lediglich Ausführungsbeispiele zeigender Zeichnungen näher erläutert. Es zeigen:
- **Fig.1**: in schematischer Darstellung in Ansicht von vorne ein erstes Ausführungsbeispiel einer erfindungs- gemäßen Seilendverankerung;
- **Fig. 2**: in einer der Fig. 1 entsprechenden Ansicht ein zweites Ausführungsbeispiel gemäß der Erfindung; und
- **Fig. 3**: das Ausführungsbeispiel nach Fig. 2 in seitlicher um 90° gedrehter teilweise aufgebrochener An- sicht.

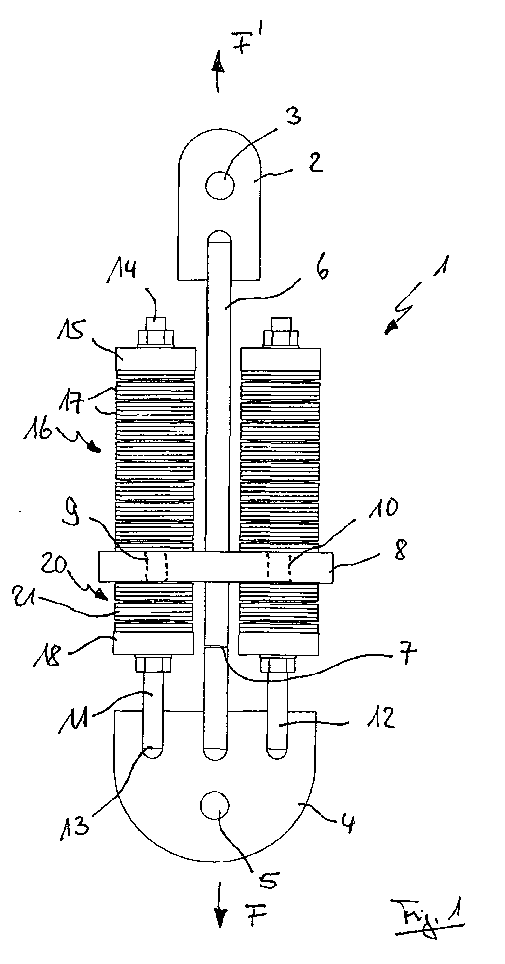

In Fig. 1 ist ein erstes Ausführungsbeispiel einer erfindungsgemäßen Seilendverankerung 1 dargestellt. Die Seilendverankerung weist ein erstes Anschlusselement 2 in Form einer Befestigungsplatte auf. Die Befestigungsplatte ist mit einer Ausnehmung 3 zum Durchtritt eines nicht dargestellten Befestigungsbolzens zur Befestigung an einer nicht dargestellten Tragstruktur versehen. Weiter weist die Seilendverankerung ein zweites Anschlusselement 4 ebenfalls in Form einer Befestigungsplatte mit einer in ihrer Funktion der Ausnehmung 3 entsprechenden Ausnehmung 5 auf. Über die Ausnehmung kann mittels eines Schraubbolzens oder dergleichen das Ende eines mit einem entsprechenden Fitting versehenen Stahlseils angebunden sein.

Die beiden Anschlusselemente 2 und 4 sind über ein stangenförmiges Koppelelement 6 kraftübertragend, das heißt zunächst im Wesentlichen starr miteinander verbunden. Beim Auftreten einer Zugkraft in Pfeilrichtung F wird die dabei am Seil anliegende Last auf die Tragstruktur übertragen.

Das Koppelelement 6 weist eine Überlasteinrichtung 7 in Form einer das Koppelelement umlaufenden Ringnut auf. Diese Ringnut bewirkt eine Querschnittsschwächung des stabförmigen Koppelelementes und stellt somit eine Sollbruchstelle dar, die bei Überschreiten einer Grenzlast zum Versagen bzw. Bruch des Koppelelementes 6 führt. Dadurch wird die starre Verbindung zwischen den beiden Anschlusselementen 2 und 4 und somit auch zwischen der Tragstruktur und dem Seilzugglied gelöst. Während das Anschlusselement 2 im Wesentlichen unbeweglich an der Tragstruktur verbleibt, bewegt sich das Anschlusselement 4 aufgrund der Zuglast des Seils in Richtung des Pfeils F. Dabei erfolgt schlagartig ein Abbau der auf die Tragstruktur wirkenden Last und damit ein Schutz der Tragstruktur gegen Überlastung und Zerstörung.

Um das frei werdende Seilende zu fangen und die Bewegung des Seilendes und damit des Anschlussteils 4 zu begrenzen, ist beim Ausführungsbeispiel nach Fig. 1 eine Anschlageinrichtung vorgesehen. Diese Anschlageinrichtung weist eine Querplatte 8 auf. Die Querplatte 8 ist, bezogen auf das Anschlusselement 4 über diesem kraftübertragend am Koppelelement 6 befestigt, hier angeschweißt. Die Querplatte 8 weist zwei lediglich schematisch angedeutete durchgehende Ausnehmungen 9 und 10 auf, die von zwei Zugstangen 11 und 12 mit radialem Spiel durchgriffen werden. Da die beiden Zugstangen 11 und 12 identisch ausgebildet sind, wird nachfolgend die Gestaltung lediglich am Beispiel der Zugstange 11 beschrieben. Die Zugstange 11 ist mit ihrem ersten Ende 13 am Anschlusselement befestigt, hier angeschweißt. Mit ihrem zweiten freien Ende 14 bzw. ihrem Schaft durchgreift die Zugstange die Ausnehmung 9. Im Bereich des zweiten Endes 14, das mit einem Gewinde versehen ist, ist auf der Zugstange 11 eine Endplatte 15 vorgesehen. Diese wird ebenfalls von der Zugstange mit radialem Spiel durchgriffen und von der Spannmutter 15, die auf das Gewinde der Zugstange aufgeschraubt ist, gesichert.

Zwischen der Endplatte 15 und der Querplatte 8 ist ein Feder- und/oder Dämpferelement 16 in Form eines Paketes aus Tellerfedern 17 angeordnet. Diese werden vom Schaft der Zugstange 11 durchgriffen. Durch Festziehen oder Lösen der Spannmutter 15 kann in einfacher Weise die Vorspannung des Tellerfederpakets 16, 17 voreingestellt werden.

Unterhalb der Querplatte 8 ist auf der Zugstange 11 eine Mitnehmerplatte 18 angeordnet, die ebenfalls mit radialem Spiel von der Zugstange durchgriffen wird. Auch diese Mitnehmerplatte 18 ist über eine zweite Spannmutter 19, die auf die Zugstange aufgeschraubt ist, gesichert. In ähnlicher Weise wie vorstehend beschrieben ist zwischen der Querplatte 8 und der Mitnehmerplatte 18 ein zweites Feder- und/oder Dämpferelement 20 bestehend aus einem Paket aus Tellerfedern 21 angeordnet. Auch hier kann das Tellerfederpaket durch die Spannmutter 19 auf einen gewünschten Wert vorgespannt werden.

Bricht nun bei Überschreiten einer kritischen Grenzlast am Seilzugglied die Sollbruchstelle, wird das frei werdende Seilende und damit das Anschlusselement 4 in Richtung des Pfeils F beschleunigt. Dabei werden über die gegenüber der Querplatte 8 beweglichen Zugstangen 11 und 12 die Endplatten mit beschleunigt und spannen so das Tellerfederpaket 16. Dabei erfolgt neben der schlagartigen Entlastung eine elastische Abpufferung der freigewordenen Energie, wobei zudem das freie Seilende gefangen wird. Ein aufgrund der elastischen Rückstellkraft des Tellerfederpaketes 16 und insbesondere des Seilzuggliedes insgesamt erfolgender Rückschlag wird über die Mitnehmerplatte 18, das Tellerfederpaket 20 und die Querplatte 8 abgefedert.

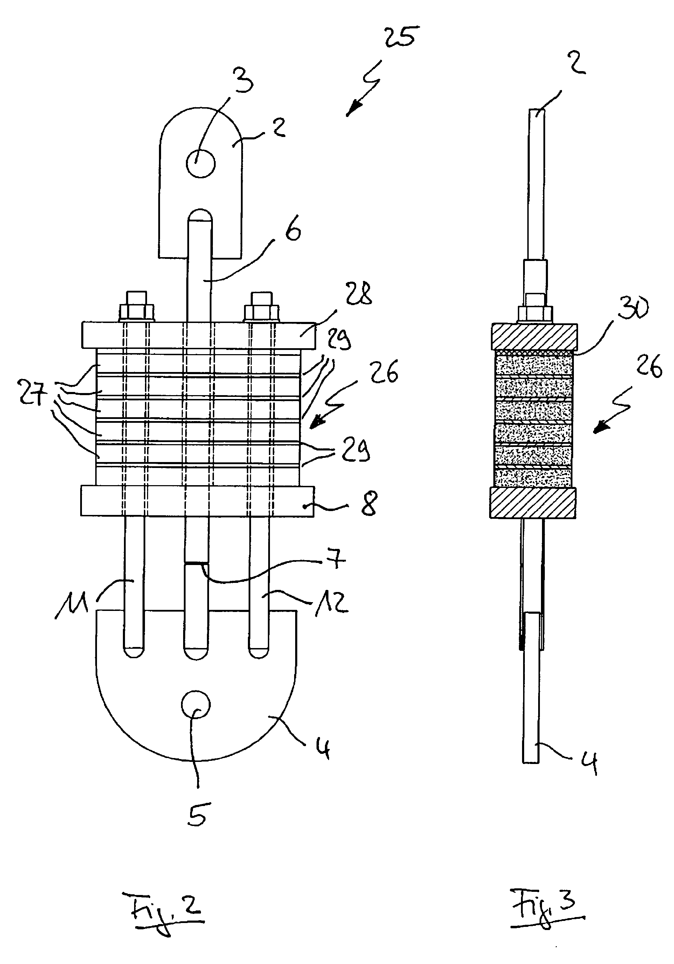

Das in Fig. 2 dargestellte Ausführungsbeispiel einer erfindungsgemäßen Seilendverankerung 25 weist zunächst grundsätzlich den gleichen Aufbau auf wie das Ausführungsbeispiel nach Fig. 1. Während jedoch im Ausführungsbeispiel nach Fig. 1 die Feder- und/oder Dämpfereinrichtung durch zwei Tellerfederpakete 16 gebildet wird, die jeweils von einer Zugstange 11 bzw. 12 durchgriffen werden, wird die Feder- und/oder Dämpfereinrichtung des Ausführungsbeispiels der Fig. 2 durch ein einziges Paket 26 aus plastisch verformbaren Elementen 27 aus beispielsweise Aluminiumschaum oder Leichtbeton, die stapelartig in Lastrichtung übereinander angeordnet sind, gebildet. Die Endplatte 28, die vom Koppelelement 6 mit radialem Spiel durchgriffen wird, ist im Gegensatz zum Ausführungsbeispiel nach Fig. 1, bei dem jeweils eine Endplatte 15 für jede Zugstange vorgesehen ist, einstückig und wirkt mit beiden Zugstangen 12 und 12 gleichzeitig zusammen.

Die plastisch verformbaren Elemente 27 sind zur gleichmäßigen Einleitung der Verformungskräfte jeweils durch Zwischenplatten 29 aus einem harten Material, wie z.B. Stahl, getrennt.

Weiter ist zwischen der Endplatte 28 und dem nächstliegenden plastisch verformbaren Element 27 eine Zwischenlage 30 aus einem Material geringer Festigkeit und Härte, beispielsweise Silikon, angeordnet. Dadurch wird verhindert, dass während des Bruchs der Sollbruchstelle 7, der mit einer Längung des Koppelgliedes verbunden ist, bereits eine Belastung des Feder- und/oder Dämpferelementes 26 stattfindet, wodurch die Bruchcharakteristik der Sollbruchstelle nachteilig verändert werden könnte. Vielmehr kann so zuverlässig eine funktionelle Trennung von Sollbruchstelle und Auffangen der frei werdenden Belastung erreicht werden.

## Patentansprüche

1. Seilendverankerung zur Befestigung mindestens eines Seiles an einem Tragwerk mit mindestens einem ersten Anschlusselement (2) zur Anbindung an das Tragwerk, mindestens einem zweiten Anschlusselement (4) zur Anbindung an das Seil, und mindestens einem Koppelelement (6) zur kraftübertragenden Verbindung der beiden Anschlusselemente, wobei im Bereich des Koppelelementes eine als Sollbruchstelle (7) des Koppelelementes ausgebildete Überlasteinrichtung vorgesehen ist, die bei Überschreiten einer kritischen Belastung die Verbindung zwischen den beiden Anschlusselementen löst, und wobei eine Anschlageinrichtung (16) vorgesehen ist, die die Relativbewegung der Anschlusselemente nach dem Lösen der Verbindung nach Überschreiten der kritischen Belastung begrenzt,
**gekennzeichnet durch**
eine Querplatte (8), die mit dem Kippelement (6) kraftübertragend verbunden ist, und mindestens eine Zugstange (11,12), die die Querplatte (8) in einer Ausnehmung (9) mit zumindest geringfügigem radialen Spiel durchgreift, wobei ein Ende der Zugstange (11,12) auf einer Seite der Querplatte mit einem der beiden Anschlusselemente (2,4) kraftübertragend verbunden ist und am gegenüberliegenden Ende der Zugstange auf der anderen Seite der Querplatte eine Endplatte (15) vorgesehen ist, die nach Überschreiten der kritischen Belastung als Anschlag auf der Querplatte (8) dient.

2. Seilendverankerung nach Anspruch 1,
**dadurch gekennzeichnet,**
**dass** das Koppelelement (6) als Zugstab, Zugband oder Zugplatte oder als Zugstab-, Zugband- oder Zugplattenanordnung ausgebildet ist.

3. Seilendverankerung nach Anspruch 1 oder 2,
**dadurch gekennzeichnet,**
**dass** im Bereich der Anschlagvorrichtung (16) eine Feder- und/oder Dämpfereinrichtung (17) zur Aufnahme der nach dem Lösen der Verbindung nach Überschreiten der kritischen Belastung auf die Anschlageinrichtung wirkenden Lasten vorgesehen ist.

4. Seilendverankerung nach Anspruch 3,
**dadurch gekennzeichnet,**
**dass** die Feder- und/oder Dämpfereinrichtung mindestens ein elastisches Element, insbesondere in Form einer Schraubenfeder, Tellerfeder, eines Tellerfederpaketes oder einer Elastomerfeder, aufweist.

5. Seilendverankerung nach Anspruch 3 oder 4,
**dadurch gekennzeichnet,**
**dass** die Feder- und/oder Dämpfereinrichtung mindestens ein elastoplastisches Element, insbesondere in Form eines Kunststoffpuffers, aufweist.

6. Seilendverankerung nach einem der Ansprüche 3 bis 5,
**dadurch gekennzeichnet,**
**dass** die Feder- und/oder Dämpfereinrichtung mindestens ein plastisch verformbares Element, insbesondere aus Aluminiumschaum, Aluminiumwabenmaterial, Aluminiumkugeln, Porenbeton oder Leichtbeton oder dergleichen, aufweist.

7. Seilendverankerung nach Anspruch 6,
**dadurch gekennzeichnet,**
**dass** die elastisch, elasto-plastisch und/oder plastisch verformbaren Elemente zwischen der Querplatte (8) und der Endplatte (15) angeordnet sind und von der Zugstange durchgriffen werden.

8. Seilendverankerung nach Anspruch 7,
**dadurch gekennzeichnet,**
**dass** mindestens zwei Zugstangen (11,12) vorgesehen sind, wobei jede Zugstange eine separate Feder- und/oder Dämpfereinrichtung durchgreift.

9. Seilendverankerung nach Anspruch 7,
**dadurch gekennzeichnet,**
**dass** mindestens zwei Zugstangen vorgesehen sind, die eine gemeinsame Feder- und/oder Dämpfereinrichtung durchgreifen.

10. Seilendverankerung nach Anspruch 8 oder 9,
**dadurch gekennzeichnet,**
**dass** die Zugstangen und/oder die Feder- und/oder Dämpfereinrichtungen symmetrisch zur durch das Koppelelement (6) verlaufenden Längsachse angeordnet sind.

11. Seilendverankerung nach einem der Ansprüche 3 bis 10,
**dadurch gekennzeichnet,**
**dass** die Feder- und/oder Dämpfereinrichtung eine Mehrzahl von in Belastungsrichtung hintereinender angeordneten Feder- und/oder Dämpfungselementen aufweist, die durch dazwischen angeordnete Zwischenplatten (29) getrennt sind.

12. Seilendverankerung nach einem der Ansprüche 3 bis 11,
**gekennzeichnet durch**
mindestens eine zwischen der Querplatte und der Feder- und/oder Dämpfereinrichtung, zwischen der Endplatte und der Feder- und/oder Dämpfereinrichtung und/oder zwischen den Feder- und/oder Dämpfungselementen der Feder- und/oder Dämpfereinrichtung angeordnete Zwischenlage (30) aus einem Material geringer Festigkeit.

13. Seilendverankerung nach einem der Ansprüche 1 bis 12,
**gekennzeichnet durch**
eine Mitnehmerplatte (18) an der Zugstange (11,12) zwischen dem Ende (13) der Zugstange, das mit dem Anschlusselement (4) verbunden ist, und der Querplatte (8), wobei zwischen der Mitnehmerplatte (18) und der Querplatte (8) elastisch, elasto-plastisch und/oder plastisch verformbare Elemente angeordnet sind und von der Zugstange durchgriffen werden.

14. Seilendverankerung nach einem der Ansprüche 1 bis 13,
**dadurch gekennzeichnet,**
**dass** die Zugstange zumindest abschnittsweise mit einem Gewinde versehen ist und die elastisch, elasto-plastisch und/oder plastisch verformbaren Elemente zwischen der Endplatte (15) und der Querplatte (8) bzw. der Mitnehmerplatte (18) und der Querplatte (8) über eine Spannmutter vorspannbar sind.

## Claims

1. Cable end anchorage for fastening at least one cable at a supporting structure, with at least one first connecting element (2) for connection with the supporting structure, at least one second connecting element (4) for connection with the cable and at least one coupling element (6) for connection of the two connecting elements in a force-transmitting manner, wherein in the region of the coupling element, an overload device designed as predetermined breaking point (7) of the coupling element is provided for unfastening the connection between the two connecting elements when a critical load has been exceeded, and wherein a stop device (16) is provided for limiting the relative motion of the connecting elements after unfastening of the connection when a critical load has been exceeded,
**characterised by**
a transverse plate (8) that is connected with the coupling element (6) in a force-transmitting manner and at least one tension rod (11, 12) that penetrates the transverse plate (8) in a recess (9) with an at least slightly radial clearance, wherein one end of the tension rod (11, 12) is connected with one of the two connecting elements (2, 4) in a force-transmitting manner on one side of the transverse plate, and a terminal plate (15) is provided at the opposite end of the tension rod on the other side of the transverse plate, the terminal plate serving as a stop on the transverse plate (8) when a critical load has been exceeded.

2. Cable end anchorage according to claim 1,
**characterised in that**
the coupling element (6) is formed as a tension rod, pull cable or tension plate or as a tension rod, pull cable or tension plate arrangement.

3. Cable end anchorage according to claim 1 or 2,
**characterised in that**
in the region of the stop device (16), a spring and/or damper device (17) is provided for absorbing the loads acting upon the stop device after unfastening of the connection when the critical load has been exceeded.

4. Cable end anchorage according to claim 3,
**characterised in that**
the spring and/or damper device features at least one elastic element, particularly in the form of a coil spring, disk spring, stack of disk springs or an elastomer spring.

5. Cable end anchorage according to claim 3 or 4,
**characterised in that**
the spring and/or damper device features at least one elasto-plastic element, in particular in the form of a plastic buffer.

6. Cable end anchorage according to any of claims 3 to 5,
**characterised in that**
the spring and/or damper device features at least one plastically deformable element, in particular made of aluminium foam, aluminium honeycomb material, aluminium beads, porous concrete or light-weight concrete or the like.

7. Cable end anchorage according to claim 6,
**characterised in that**
the elastically, elasto-plastically and/or plastically deformable elements are arranged between the transverse plate (8) and the terminal plate (15) and are penetrated by the tension rod.

8. Cable end anchorage according to claim 7,
**characterised in that**
at least two tension rods (11, 12) are provided, wherein each tension rod penetrates a separate spring and/or damper device.

9. Cable end anchorage according to claim 7,
**characterised in that**
at least two tension rods are provided that penetrate a shared spring and/or damper device.

10. Cable end anchorage according to claims 8 or 9,
**characterised in that**
the tension rods and/or spring devices and/or damper devices are symmetrically arranged with respect to the longitudinal axis extending through the coupling element (6).

11. Cable end anchorage according to any of claims 3 to 10,
**characterised in that**
the spring device and/or damper device features a plurality of spring elements and/or damper elements that are consecutively arranged in the direction of loading and that are separated by interposed intermediate plates (29).

12. Cable end anchorage according to any of claims 3 to 11,
**characterised by**
at least one intermediate layer (30) composed of a material with low stability being arranged either between the transverse plate and the spring device and/or damper device, between the terminal plate and the spring device and/or damper device and/or between the spring elements and/or damper elements of the spring device and/or damper device.

13. Cable end anchorage according to any of claims 1 to 12,
**characterised by**
a follower plate (18) arranged at the tension rod (11, 12) between the end (13) of the tension rod, that is connected with the connecting element (4), and the transverse plate (8), wherein elastically, elasto-plastically and/or plastically deformable elements are arranged between the follower plate (18) and the transverse plate (8) and are penetrated by the tension rod.

14. Cable end anchorage according to any of claims 1 to 13,
**characterised in that**
the tension rod is provided with a thread at least in sections and the elastically, elasto-plastically and/or plastically deformable elements can be braced between the terminal plate (15) and the transverse plate (8) or between the follower plate (18) and the transverse plate (8) with the aid of a clamping nut.

## Revendications

1. Ancrage d'extrémité de câble pour accrocher au moins un câble à une structure porteuse, ayant au moins un premier élément de connexion (2) pour la connexion à la structure porteuse, au moins un deuxième élément de connexion (4) pour la connexion au câble et au moins un élément de couplage (6) pour la connexion avec transmission de force des deux éléments de connexion, dans lequel dans la région de l'élément de couplage un dispositif de surcharge réalisé comme point de rupture (7) de l'élément de couplage est prévu, ledit dispositif de surcharge desserrant la connexion entre les deux éléments de connexion quand une charge critique est dépassée, et dans lequel un dispositif d'arrêt (16) est prévu qui limite le mouvement relatif des éléments de connexion suivant le desserrage de la connexion après que la charge critique a été dépassée,
**caractérisé par**
un panneau transversal (8) qui est connecté avec transmission de force à l'élément de couplage (6), et au moins une tige de traction (11, 12) qui pénètre le panneau transversal (8) dans un évidement (9) avec un jeu radial au moins léger, dans lequel une extrémité de la tige de traction (11, 12) est connectée avec transmission de force à l'un des deux éléments de connexion (2, 4) d'un côté du panneau transversal, et à l'extrémité opposée de la tige de traction de l'autre côté du panneau transversal un panneau terminal (15) est prévu qui sert d'arrêt sur le panneau transversal (8) après que la charge critique a été dépassée.

2. Ancrage d'extrémité de câble selon la revendication 1,
**caractérisé en ce que**
l'élément de couplage (6) est réalisé en tant que tige de traction, câble de traction ou plaque de traction ou en tant qu'agencement de tige de traction, agencement de câble de traction ou agencement de plaque de traction.

3. Ancrage d'extrémité de câble selon la revendication 1 ou 2,
**caractérisé en ce que**
dans la région du dispositif d'arrêt (16) un dispositif de ressort et/ou d'amortisseur (17) est prévu pour absorber les charges agissant sur le dispositif d'arrêt suivant le desserrage de la connexion après que la charge critique a été dépassée.

4. Ancrage d'extrémité de câble selon la revendication 3,
**caractérisé en ce que**
le dispositif de ressort et/ou d'amortisseur comprend au moins un élément élastique, en particulier en forme d'un ressort à boudin, d'un ressort à disque, d'un paquet de ressorts à disque ou d'un ressort élastomère.

5. Ancrage d'extrémité de câble selon la revendication 3 ou 4,
**caractérisé en ce que**
le dispositif de ressort et/ou d'amortisseur comprend au moins un élément élasto-plastique, en particulier en forme d'un amortisseur en plastique.

6. Ancrage d'extrémité de câble selon l'une quelconque des revendications 3 à 5,
**caractérisé en ce que**
le dispositif de ressort et/ou d'amortisseur comprend au moins un élément plastiquement déformable, en particulier en mousse d'aluminium, en matériau d'aluminium en nid d'abeilles, en boules d'aluminium, en béton poreux ou en béton léger ou d'autres choses semblables.

7. Ancrage d'extrémité de câble selon la revendication 6,
**caractérisé en ce que**
les éléments élastiquement, élasto-plastiquement et/ou plastiquement déformables sont disposés entre le panneau transversal (8) et le panneau terminal (15) et ils sont pénétrés par la tige de traction.

8. Ancrage d'extrémité de câble selon la revendication 7,
**caractérisé en ce qu'**
au moins deux tiges de traction (11, 12) sont prévues, chaque tige de traction pénétrant un dispositif de ressort et/ou d'amortisseur séparé.

9. Ancrage d'extrémité de câble selon la revendication 7,
**caractérisé en ce qu'**
au moins deux tiges de traction sont prévues qui pénètrent un dispositif de ressort et/ou d'amortisseur commun.

10. Ancrage d'extrémité de câble selon la revendication 8 ou 9,
**caractérisé en ce que**
les tiges de traction et/ou les dispositifs de ressort et/ou d'amortisseur sont disposés symétriquement par rapport à l'axe longitudinal s'étendant à travers l'élément de couplage (6).

11. Ancrage d'extrémité de câble selon l'une quelconque des revendications 3 à 10,
**caractérisé en ce que**
le dispositif de ressort et/ou d'amortisseur comprend une pluralité d'éléments de ressort et/ou d'amortisseur qui sont disposés à la file dans la direction de charge et qui sont séparés par des panneaux intermédiaires (29) interposés.

12. Ancrage d'extrémité de câble selon l'une quelconque des revendications 3 à 11,
**caractérisé par**
au moins une couche intermédiaire (30) en un matériau d'une rigidité faible, disposée entre le panneau transversal et le dispositif de ressort et/ou d'amortisseur, entre le panneau terminal et le dispositif de ressort et/ou d'amortisseur et/ou entre les éléments de ressort et/ou d'amortisseur du dispositif de ressort et/ou d'amortisseur.

13. Ancrage d'extrémité de câble selon l'une quelconque des revendications 1 à 12,
**caractérisé par**
une plaque d'entraînement (18) sur la tige de traction (11, 12) entre l'extrémité (13) de la tige de traction étant connectée à l'élément de connexion (4) et le panneau transversal (8), des éléments élastiquement, élasto-plastiquement et/ou plastiquement déformables étant disposés entre la plaque d'entraînement (18) et le panneau transversal (8) et étant pénétrés par la tige de traction.

14. Ancrage d'extrémité de câble selon l'une quelconque des revendications 1 à 13,
**caractérisé en ce que**
la tige de traction est pourvue au moins en partie d'un filetage, et les éléments élastiquement, élasto-plastiquement et/ou plastiquement déformables peuvent être précontraints par un écrou de serrage entre le panneau terminal (15) et le panneau transversal (8), respectivement entre la plaque d'entraînement (18) et le panneau transversal (8).
